# EUROPEAN PATENT SPECIFICATION

(11) **EP 0 466 970 B1**
(45) Date of publication and mention of the grant of the patent: **22.09.2004**
(21) Application number: 90113991.5
(22) Date of filing: 20.07.1990
(51) Int. Cl.: G06F 13/40

(54) **Microprocessor with multiple bus configurations**
Mikroprozessor mit einer Vielzahl von Buskonfigurationen
Microprocesseur avec plusieurs configurations de bus

(43) Date of publication of application: 22.01.1992
(73) Proprietor: Infineon Technologies AG, 81669 München (DE)
(72) Inventor: Fleck, Rod, D-8000 München 80 (DE)
(74) Representative: Jannig, Peter, Dipl.-Ing.

(56) References cited:
- WO-A-86/00436
- DE-A- 3 113 870
- US-A- 4 509 120
- COMPUTER DESIGN. LITTLETON, MASSACHUSSETS, US pages 24 - 26; W.ANDREWS: "Multibus I stretches to 32 bits"
- SIEMENS COMPONENTS. vol. XXII, no. 5, October 1987, MUNCHEN DE pages 176 - 179; O.FEGER: "BIC - Bus Interface Does Many Jobs"

## Description

The invention relates to a microprocessor, having an internal bus with data-, address- and control lines.

Most microprocessors or microcontrollers use similar external bus configurations to communicate with external memory and peripheral devices. These buses provide the ability to read and write byte or word wide data (8, 16, 32, and 64-bit) to said peripherals via a plurality of data, address and control lines. These so called buses represent the primary communication path of microprocessors or microcontrollers. In general, two types of buses have become common.

The first bus concept, multiplexed buses, allows a single set of wires to transfer both address and data information between the processor and external device. The number of wires is normally equal to the primary data size or the number of bits required to represent the address range. Additionally, several control signals are provided to control communication between microprocessor and peripherals. Especially, the ALE-signal indicates whether the bus lines forming the multiplexed bus are used for addresses. The Read/Write lines specify whether the multiplexed bus is used for data and the direction in which the multiplexed bus will be driven. During the time the ALE-signal is present, the peripheral device must not drive the bus. Otherwise the system would collapse because at that time the multiplexed bus transfers address signals and a data transfer is therefore impossible. The multiplexed bus concept became very popular in the first single chip microprocessors or microcontrollers, due to the low number of pins and board routes which were required. This bus system has been used in many previous Intel and Intel compatible microprocessors or microcontrollers (e.g. can be seen in the Siemens Microcomputer Components Data Catalogue 1988 page 41ff).

The second bus concept, non-multiplexed buses, requires two independent buses where address is transferred via one bus and data is transferred on a second bus. Since two pieces of information can be transferred at one time, the non-multiplexed bus normally provides better performance. Also in this bus concept, several control signals to control the data transfer are provided. An ALE-signal to seperate address signals from data signals is in this bus concept not necessary. Here, only a signal is necessary to indicate that the address signals on the bus are stable. Interface delays tend to be better since address buses are send only buses where data- and multiplexed buses must be "tri-stated" during data read cycles, which incur "tri-state" on and off delays. This type of bus has become more common today due the increased performance and the decreasing cost of pins and board routes. In many of the Motorola microprocessors, this bus type has been incorporated. The DE 25 604 74 for example shows a microprocessor using this bus type.

However, many different interface chips, memories and peripherals exist and, in general, it is not possible to adapt one chip, designed for the first bus, to the second bus type and vice versa. To connect chips with different interfaces, some amount of logic devices is required to allow interface signals to be adapted to one or the other.

In general, the majority of peripheral chips today provide multiplexed bus interfaces to reduce package size and costs. In many cases this does not limit the system designer since a small amount of data is transferred to and from these devices. However in the case of memory, the costs of using multiplexed buses can degrade system performance substantially where large amount of data must be transferred. This bus has become more popular in newer systems where the number of internal cycles to perform an operation has decreased to the point where the bus can become the limiting factor. Memory speeds have also scaled up such that access times are not limiting to possible data throughput.

In many cases, peripheral chips have provided multiple bus interface logic to increase market share by selling into both environments. One of these, the Siemens SAB 82 257, is published in Siemens Microcomputer Components Data Catalogue 1988, page 635. These have proven very effective in single bus type systems if no high-speed access is demanded, but even these peripheral chips need some external hardware to support two different bus configuration.

Thus in systems where the multiplexed bus has become the limiting factor over the internal system architecture, many system designers prefer to switch to faster non-multiplexed bus configurations. Since many products contain a number of subsystems where system designers prefer to only modifiy portions of the system to reduce cost and design times to market, it is advantageous to support also older subsystems which do not limit the system performance with new faster subsystems.

Also it is very often necessary to slow down several control signals, whenever a very fast microprocessor communications with a slow peripheral device. Slow memory devices, like EPROM's, need the insertion of several "wait-states" for data reading.

Todays versions of microcontrollers and microprocessors do not allow the user to actively switch bus configurations.

In WO- A-8 600 436 a microprocessor is disclosed, which comprises an internal bus with data-, address- and control lines in which programmable bus control means are provided which connect a plurality of external lines with said internal bus such that in response to the programming of said bus control means an external bus with a programmable data width is formed. However WO- A-8 600 436 does not disclose a programmable bus controller which allows the change between multiplexed and non-multiplexed bus configuration.

In Computer Design, Vol. 29, 01/03/90, no. 5, Tulsa, OK, US, pages 24-26, W. Andrews, "Multibus I stretches to 32 bits", an additional bus interface for an microprocessor is provided, which allows the change between multiplexed to non-multiplexed bus configurations, whereas this change is not programmable but controlled dynamically in that way that always the fastest bus cycle possible is chosen.

It is accordingly an object of the invention to provide a microprocessor which provides an external bus that supports multiplexed and non-multiplexed bus types with different data bus with for both bus types without the need of additional interface hardware to connect different bus type devices to the external bus of said microprocessor.

This object is achieved with a microprocessor according to claim 1. Further developments of the invention follow from the subclaims. The basis of the invention is to supply a microprocessor or microcontroller with a bus control unit that allows users to be able to perform any combination of multiplexed and non-multiplexed bus accesses without change to software or hardware. This bus control unit connects the internal address and data lines to the external pins of the processor in a way that either a multiplexed or a non-multiplexed external bus configuration is build. Also, the control unit generates all necessary control signals for the respective bus type or/and connects a control signal line which the processor already supports to the respective output pin of the microprocessor or microcontroller.

The invention is further described below with reference to the accompanying drawings in which:
- FIG 1: is a block circuit diagramm of an embodiment of the invention.
- FIG 2: shows a first application of a microprocessor according to the invention.
- FIG 3: shows a second application of a microprocessor according to the invention.
- FIG 4: shows a third application of a microprocessor according to the invention.
- FIG 5: is a diagram, showing 3 control registers SYSCON, BUSCON, ADDRSEL of a microprocessor according to the invention.
- FIG 6: is a diagram, showing a divided address space, each adress space representing a different bus structure.
- FIG 7: is a diagram, showing different selections for the ADDRESEL register.
- FIG 8: is on timing diagram for a multiplexed bus access following a non-multiplexed bus access.
- FIG 9: is a timing diagram, which shows a peripheral access with "wait-states" and "Ready" signals.

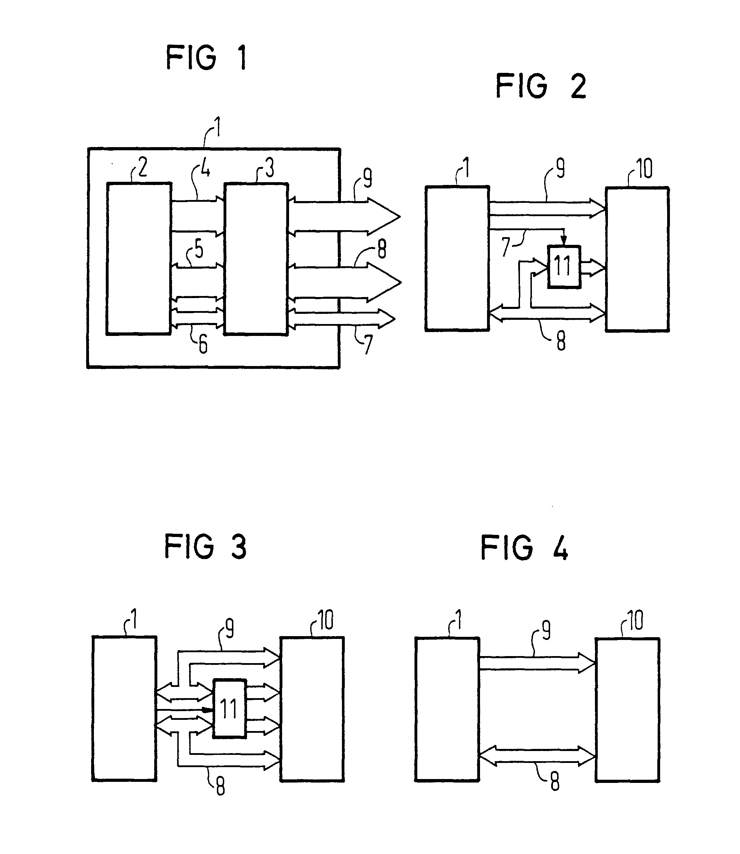

According to FIG 1, a microprocessor or microcontroller consists of a processor unit 2 with an internal address bus 4, an internal data bus 5 and an internal control bus 6 which are connected to a bus control unit 3. The data bus width can be 8, 16, 32 or more bits. According to the address space of the processor 2, the width of address and control bus 4, 6 is formed. Furthermore the data bus 5 and address bus 4 will be assumed as 16 bit wide. The bus control unit 3 on its part provides two programmable input/output ports 8, 9 and additional control port, which are connected to the external pins of the microprocessor or microcontroller and are building the external bus.

According to the invention, the microprocessor provides a bus control unit 3 that allows different external bus configurations. The internal buses 4, 5, 6 provide an optimum interconnection between the processor unit 2 and the bus control unit 3 based on the internal timing of the said part. The bus control unit 3 allows transfers from the processor unit 2 to be buffered and interconnected to external peripherals via buses 7, 8, 9. Importantly, the two sets of buses, the internal 4, 5, 6 and the external 7, 8, 9, normally have very different control structures. The bus control unit 3 is programmable and depending on the bus configuration which has been programmed, the bus control unit 3 interconnects the external bus lines 7, 8, 9 with the respective internal buses 4, 5, 6, converts the timing and if necessary latches signals of the buses. This can be done for example via different multiplexers, latches and control logic. For example, a microprocessor, according to the invention, could have several external ports. The bus control unit connects, depending on programming, the external ports with the respective internal address, data and control lines. For programming the bus control unit 3, several registers are provided which will be explained later. The different control signals, which are needed for the multiplexed or the non-multiplexed bus type are also generated by means included in the bus control unit 3. These control signals can be supported through an additional port.

The bus control unit 3 determines whether control signals will be lengthened in case of switching from one bus type to another or not. Furthermore, the control unit 3 can generate "wait-states", the "Read/Write"-signal, can evaluate a "Ready"-signal which will be generated by a peripheral device and can switch the external bus lines into a "tri-state" mode. Another feature of the microprocessor according to the invention is that within the bus control unit 3, for example, a first SYSCON register and 4 BUSCON registers can be provided. The SYSCON register allows the user to define the standard external bus type of the microprocessor. The 4 BUSCON registers define, corresponding to their programming, 4 independent address ranges for different bus types and bus sizes. Moreover, the bus control unit can generate "chip-select" signals for SYSCON and BUSCON register defined address ranges. These registers are programmable by the user via the processor unit 2. The quantity of BUSSCON-registers is not limeted to 4.

FIG 2 to FIG 4 are application examples of the above mentioned embodiment of the invention. FIG 2 shows a multiplexed 8 bit wide data bus configuration. The microprocessor 1 is connected via 8 bits of the first port 8 with a peripheral device 10. The same 8 lines of port 8 are also connected to a latch 11 which on its part connects the first part of the peripheral device 10 address bus with port 8. In some cases, the latch will be integrated into the peripheral device 10. The second part of the peripheral device 10 address bus is directly connected with 8 bits of the second port 9 of the microprocessor 1. As this second bus is an non-multiplexed address bus port 9 can be programmed as an unidirectional port, otherwise the first port 8 must be a bidirectional port because it supplies the peripheral device with address and data information. For reasons of a clear arrangement only one control line 7 is shown, which controls the address latch.

FIG 3 shows a multiplexed 16-bit wide data bus configuration. All interconnection between the microprocessor 1 and the peripheral device 10 are the same as shown in FIG 2, except that of the interconnection between the second port 9 and the peripheral device 10. As 16 data lines are needed, this port 9 connects the upper 8 data lines of the microprocessor 1 with the respective data lines of the peripheral device 10. Port 9 is also connected to the latch 11 which latches now 16 bit address signals. In this case, both ports 8, 9 of the microprocessor are multiplexed. Again the control bus is not shown for clearity except the address latch control signal 7.

The latch 11, shown in FIG 2, 3, is normally included in Intel compatible peripheral devices.

FIG 4 shows an application with a non-multiplexed bus configuration with the same microprocessor or microcontroller depicted in the preceded FIG 2, 3. The microprocessor 1 is interconnected to a peripheral device 10 via a first port 8 which transfers bidirectional data information. Alternatively, 8 or 16 bits of port 8 according to the bus width can be used. The second 16-bit wide port 9 interconnects the processor 1 address lines with the respective inputs of the peripheral device 10. Again, the control bus is not depicted in FIG 4.

The core control processor unit (CPU) requires a set of special function registers to maintain system state information, to provide for system configuration options, to control code memory segmentation and data memory paging and so on. These registers can not only be modified explicitly by the programmer, but can be updated implicitly by the CPU during normal instruction processing.

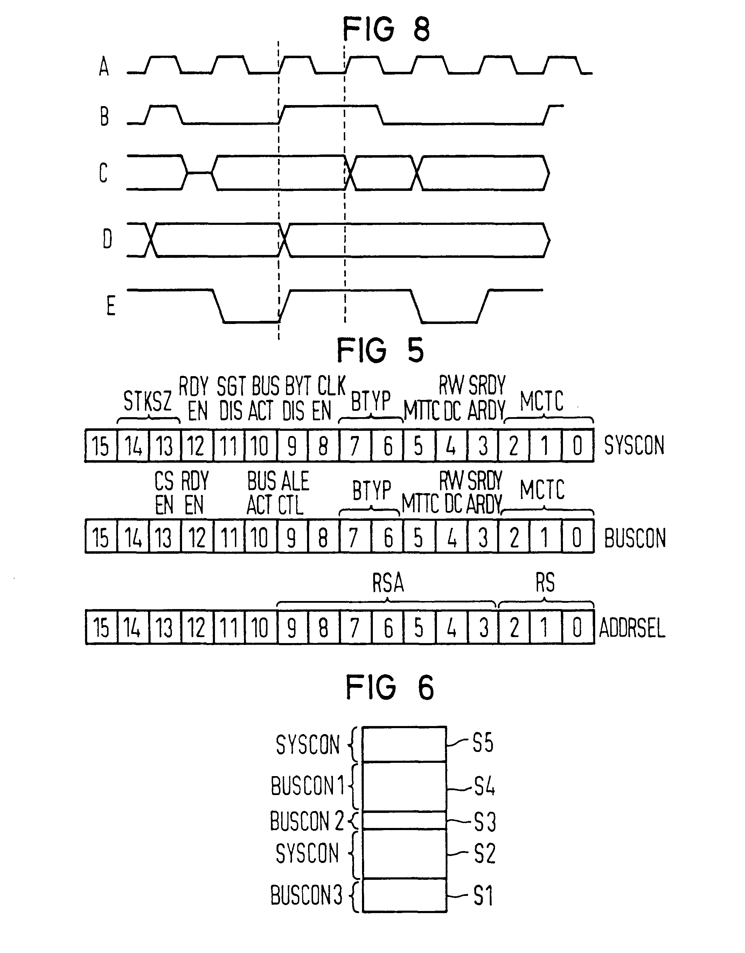

FIG 5 shows 3 special 16 bit-wide registers included in the bus control unit. The first, the SYSCON register, is a bit addressable register that provides system configuration and control functions. This register is divided into serveral parts. The MCTC bit field (bit 0...2) and the MTTC (bit 5) and RWDC (bit 4) bits within the SYSCON register are provided for varying external bus timing parameters, as follows. The memory cycle can be extended by the processor state time in a range from 0 to 15 or from 0 to 7 if the READY function is used by means of the MCTC bit field. By means of the MTTC bit, the memory tri-state time can be extended by either '1' or '0' additional state times. The memory tri-state time is additionally extended by one state time whenever a multiplexed external bux configuration is selected. An additional Read/Write signal delay of half a state time can be programmed via the RWDC bit. The two bit field BTYP (bits 6, 7) reflects the external bus configuration mode currently selected. 4 different bus configurations are provided. These are: 8- or 16-bit multiplexed and 8-or 16-bit non multiplexed bus configuration. The clock output function becomes enabled by setting the CLKEN bit (bit 8) of the SYSCON register to '1'. If enabled, the respective port pin takes on its alternate function as CLKOUT output pin. The BYTDIS bit (bit 9) provides for controlling the active low byte high enable pin of the microprocessor. The function of this pin is enabled if the BYTDIS bit contains a '0'. Otherwise, it is disabled and the pin can be used as standard I/O pin. The pin is implicitly used by the bus control unit to select one of two byte organized memory chips which are connected to the microprocessor via a word wide external data bus. The BUSACT bit (bit 10) enables the SYSCON or any BUSCON register. If it is set to '0' no external bus will be configurated. When only 16 address lines are used, the memory space is limited to 64 K bytes in the non-segmented mode. The SGTDIS bit (bit 11) allows to select either a segmented or non-segmented memory mode. In case of a non-segmented memory mode (SGTDIS = "1"), the entire address space is restricted to 64 K bytes, and thus only 16-bit addresses are required to address memory locations within segment 0. In case of a segmented memory mode (SGTDIS = "0"), additional port pins are used to generate a physical 18-bit address. Of course any other address bus width could be implemented. The RDYEN bit (bit 12) provides an optional Data-Ready function via the active low READY input pin to allow an external memory controller or peripheral to determine the duration of an external memory access. If enabled, an active low signal on the READY input pin signifies that data is available, and must be latched by the bus control unit.

Additional, the SRDY/ARDY bit (bit 3) determines whether a synchronous or asynchronous READY-function is used. The two STKSZ bits determine the size of the system stack from 32 words up to 256 words. Bit 15 of the SYSCON register can be used in future implementations.

The second, BUSCON, register is provided four times provided. Its structure is almost like that of the SYSCON register except bits 8, 9, 11, 13, 14. All other bits control the same functions as their respective bits of the SYSCON register. For each BUSCON register, there is provided a respective ADDRSEL register. These ADDRSEL register defines the valid address range of the respective BUSCON register. Bit 8, 11, 14, 15 of the BUSCON registers can be used for future implementations. Unlike to the SYSCON register the bit 9 of the BUSCON register determines whether a lengthened ADDRESS Enable Latch signal will be generated or not. This may be relevant in a multiplexed bus configuration whenever the microprocessor does an access to slower peripherals. Another special feature of the BUSCON register provides the CSEN bit (bit 13). If this function is enabled, the bus control unit generates a chip-select signal on the respective port pin for the address range defined in the respective ADDRSEL register.

The ADDRESEL register allows the user to define a address range which defines the bus configuration, the timing and the other features which are fixed by the respective BUSCON register. The first three RS bits (bit 0...2) define the range size and the following seven RSA bits (bits 3...9) define the range start address. The range start address must always be a multiple of the range size.

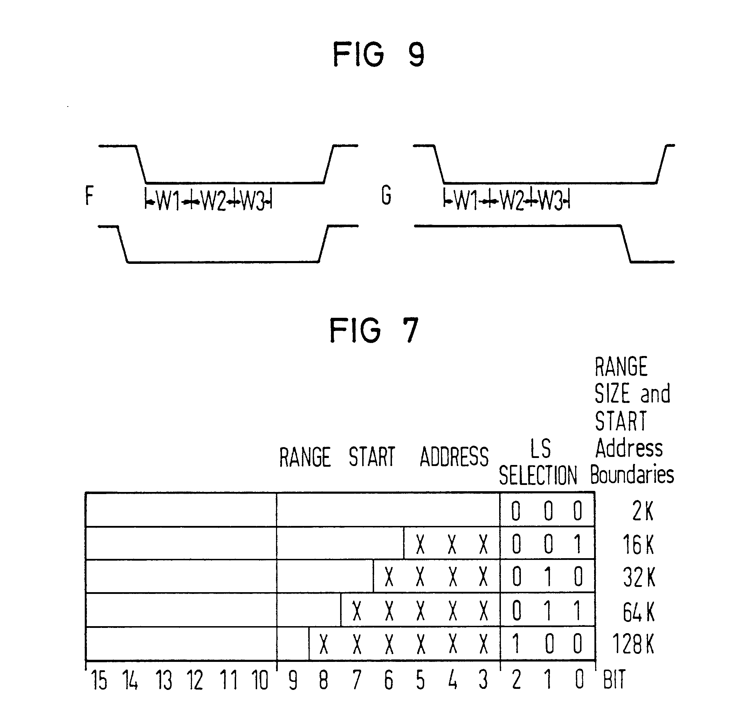

FIG 7 depicts a diagram which shows 5 different selections for the ADDRESEL register. The range size is from 2K to 128k bytes in this case. Respectively the range start address is reduced. For example, if the range size is set to 32K in the RS bit field, only three further bits are needed to define the range start address in the RSA bit field since the total address range is 256K byte in this example. For other address ranges the selection sizes must be adjusted.

FIG 6 shows an example of a divided address range by means of 3 BUSCON registers. First the SYSCON register defines the standard bus type and functions of the whole address range. After programming 3 of the four BUSCON registers the total address range is divided into 5 parts S1...S5. Part S2 and Part S5 are definded by the SYSCON register the other parts S1, S3, S4 by the respective BUSCON registers. By means of this, it is possible to divide the address range into parts with different bus configurations and bus widths. For example part S1 is addressable as a non-multiplexed 16-bit wide bus type, part S3 as a multiplexed 8-bit wide bus, part S4 as a non-mulitplexed 8-bit wide bus and parts S2, S5 as a multiplexed 16-bit wide bus.

With such a microprocessor according to the invention, users will be able to perform any combination of multiplexed and non-multiplexed accesses without change to software or hardware. Bus types are strictly determined after the address for the read, write, or fetch access address has been sent to the bus control unit. No special instructions or address modes are required. Once the address range tests of the BUSCON registers have been made, one will be selected, or the SYSCON register will be selected when no BUSCON register is selected.

In most cases, switching from one bus type to the next, will cause no problems in timing. These include each of the following combinations:
- MUX-MUX: multiplexed bus accesses followed by any other multiplexed bus access with different wait states characteristics or different bus widths.
- NMUX-NMUX: non-multiplexed bus accesses followed by any other non-multiplexed bus access with different wait states characteristics or different bus widths.
- MUX-NMUX: any non-multiplexed bus access can immediately followed by any other multiplexed bus access with different wait states characteristics or different bus widths since the address bus is always immediately free.

None of the above cases cause any timing problems if free bus or multiple bus master cycles occur in between these accesses.

In cases where a multiplexed bus access follows a non-multiplexed bus access, an additional wait state will be required to hold the outgoing multiplexed address until the non-multiplexed access has truly completed. This wait state can always be inserted by the bus control unit whether free bus or multiple bus master cycles occur in between these accesses. This performance loss is only seen for the first multiplexed access after a non-multiplexed access such that multiple following accesses will not incur bus change penalties. By means of this, any timing problem causing a bus collision that could occur will be avoided.

FIG 8 is a timing diagram, showing a multiplexed bus access following a demultiplexed bus access; A stands for the processor clock signal; B for the address enable signal, which has different meanings in multiplexed and non-multiplexed bus configuration; C stands for the port 8 signals and D for the port 9 signals. Lastly E stands for the active low write control signal. The left part of the diagram depictes a non-multiplexed bus access and the right part a multiplexed bus access. The range in between the dotted vertical lines shows the insertion of the additional wait state. In a non-multiplexed bus access port 8 only drive data signals and port 9 only address signals. In the following multiplexed bus access, shown right to the second dotted line, port 8 drives first the new address signals and, after latching of these, port 8 switches to drive the respective data signals.

As many different peripheral devices exist and the access timing of these changes from type to type, the processor according to the invention provides several possibilities to affect the timing control of the bus control unit. As described above, the new processor allows the user to define the number of wait states from 0 to 15 or from 0 to 7 (when READY is enabled) for slow or fast peripherals. Furthermore, a read/write delay control is provided, and the memory tri-state time can be affected. The new processor allows the user also to connect two in access-timing different memories or peripherals in between one defined address range. This is possible, as the bus control unit always inserts the programmed wait states and afterwards checks the READY input pin. Although the READY function is implemented via the respective RDYEN bit of the SYSCON or BUSCON register, the bus control unit always inserts said wait states. By this, it is possible to connect a peripheral which needs up to 7 wait-states and a second slower peripheral which will be controlled via the READY input. Thus, it is not necessary to define two address ranges for such two in timing different peripherals.

FIG 9 is a timing diagram, showing the access of two different in timing peripherals. In F and G, the upper signal stands for the active low read control signal and the lower for the active low ready input signal. It is assumed that the respective BUSCON or SYSCON register is so programmed that 3 wait states are generated and an asynchronous READY function is implemented. F stands for the fast peripheral access and G for the slow peripheral access. The READY input pin is always checked after running off of the programmed wait states. Thus, in case G for reasons of a high READY level, additional wait states will be generated.

In a multiplexed bus modes it is often very complicated for the user to find design faults of an application. A special feature can be implemented in a microprocessor according to the invention. When a multiplexed bus access is made in a system where any BUSCON or SYSCON has been selected a non-multiplexed access, the address will be also driven on an additional port with similar timing to a non-multiplexed access. Preferably in the above explained examples port 9 which drives the address signals in the non-multiplexed bus mode, could be used for this, but also any other port which is not used in the system can be used for this debugging feature.

The above explained concept for a multiple bus microprocessor or microcontroller can be realized in many ways. Multiple registers can be installed into the bus control unit, which control a variety of control signals and internal function blocks. The invention is applicable for any one chip or multi-chip microprocessor or one chip or multi-chip microcontroller.

## Claims

1. Microprocessor (1) comprising
- data lines (5), address lines (4), and control lines (6) forming an internal bus (4, 5, 6),
- a plurality of external lines (7, 8, 9) forming an external bus (7, 8, 9), said external bus (7, 8, 9) being capable of connecting any external peripheral device (10) to said microprocessor (1),
- connecting means for connecting the external bus (7, 8, 9) to said microprocessor (1),
- a single bus control unit (3) for connecting said internal bus (4, 5, 6) to said external bus (7, 8, 9), whereas the internal bus (4, 5, 6) and the external bus (7, 8, 9) having different structures of their control signals,
- the bus control unit (3) having means for accessing the external bus (7, 8, 9) with data signals and address signals,
- the bus control unit (3) having a first configuration where the data signals and the address signals are multiplexed each other on at least a same set of the external lines (7, 8, 9),
- the bus control unit (3) having a second configuration where the data signals and the address signals being provided on different sets of lines on the external bus (7, 8, 9),
- the bus control unit (3) being programmable and the first and second configuration depending on the programming of the bus control unit (3) and
- different address ranges being programmable and the different address ranges defining the different accessing of the external bus (7, 8, 9).
- also comprising means (11) for latching signals of the internal bus (4, 5, 6) and/or the external bus (7, 8, 9),
- the control lines (7) retain their specific function independent of the data/address line bus width selected.

2. Microprocessor according to claim 1, **characterized in that**
- said external bus (7, 8, 9) comprises at least one control line (7),
- said bus control unit (3) generate an address-control signal being supplied to one of the external bus control lines (7),
- said address-control signal indicates whether the multiplexed bus carries valid address signals and
- the duration of said address-control signal is extendible.

3. Microprocessor according to claim 2, **characterized in that** after switching from non-multiplexed bus mode to multiplexed bus mode the duration of the address-control signal during the next following multiplexed bus access is increased.

4. Microprocessor according to one of the claims 1 to 3, **characterized in that**
- at least one control-register (SYSCON, BUSCON, ADDRESS) is provided,
- said control-register (SYSCON, BUSCON, ADDRESS) stores data,
- said data indicate an address range,
- said data indicate the width of the external data-bus (8, 9) for said valid address range,
- and said data indicate whether the external bus (7, 8, 9) is in the multiplexed mode or the non-multiplexed mode for said address range.

5. Microprocessor according to claim 4, **characterized in that** said control-register (SYSCON, BUSCON, ADDRESS) data indicate whether a "chip-select" signal will be generated.

6. Microprocessor according to claim 4 or 5, **characterized in that** said control register stores data which indicate whether and how many "wait-states" during an external peripheral access will be generated.

7. Microprocessor according to claim 6, **characterized in that** said data indicate at least whether one of the external bus control lines (7) carries a "Ready"-input signal which indicates, whether an access to the external peripheral device (10) has been completed, so that data on the external data bus lines (8, 9) are available.

8. Microprocessor according to claim 7, **characterized in that** the "Ready"-input signal is only checked after the programmed number of "wait-states" has been reached.

9. Microprocessor according to claim 8, **characterized in that** said data determines at least, whether said "Ready"-input signal is to be used in asynchronous or synchronous mode.

10. Microprocessor according to one of the claims 4 to 9, **characterized in that**,
- one of the external bus control lines (7) carries a "Read/Write"-signal,
- said control register (SYSCON, BUSCON, ADDRESS) stores data which determine in the multiplexed bus mode, whether the "Read/Write"-signal will be delayed.

11. Microprocessor according to one of the claims 4 to 10, **characterized in that** said control register (SYSCON, BUSCON, ADDRESS) stores data which determines in the multiplexed bus mode, whether the "Tri-state"-time of the external lines (7, 8, 9) carrying the address signals will be increased.

## Patentansprüche

1. Mikroprozessor (1), umfassend:
- Datenleitungen (5), Adressenleitungen (4) und Steuerleitungen (6), die einen internen Bus (4, 5, 6) bilden,
- mehrere externe Leitungen (7, 8, 9), die einen externen Bus (7, 8, 9) bilden, wobei der externe Bus (7, 8, 9) ein beliebiges externes Peripheriegerät (10) mit dem Mikroprozessor (1) verbinden kann,
- Verbindungsmittel zum Verbinden des externen Busses (7, 8, 9) mit dem Mikroprozessor (1),
- eine Einzelbussteuereinheit (3) zum Verbinden des internen Busses (4, 5, 6) mit dem externen Bus (7, 8, 9), wohingegen der interne Bus (4, 5, 6) und der externe Bus (7, 8, 9) verschiedene Strukturen ihrer Steuersignale aufweisen,
- wobei die Bussteuereinheit (3) Mittel zum Zugreifen auf den externen Bus (7, 8, 9) mit Datensignalen und Adressensignalen aufweist,
- wobei die Bussteuereinheit (3) eine erste Konfiguration aufweist, wobei die Datensignale und die Adressensignale auf mindestens einer selben Menge der externen Leitungen (7, 8, 9) miteinander gemultiplext sind,
- wobei die Bussteuereinheit (3) eine zweite Konfiguration aufweist, wobei die Datensignale und die Adressensignale auf verschiedenen Mengen von Leitungen auf dem externen Bus (7, 8, 9) bereitgestellt werden,
- wobei die Bussteuereinheit (3) programmierbar ist und die erste und die zweite Konfiguration von der Programmierung der Bussteuereinheit (3) abhängen und
- wobei verschiedene Adressenbereiche programmierbar sind und die verschiedenen Adressenbereiche das verschiedene Zugreifen auf den externen Bus (7, 8, 9) definieren,
- außerdem Mittel (11) zum Zwischenspeichern von Signalen des internen Busses (4, 5, 6) und/oder des externen Busses (7, 8, 9),
- wobei die Steuerleitungen (7) unabhängig von der gewählten Daten-/Adressenleitungsbusbreite ihre spezifische Funktion beibehalten.

2. Mikroprozessor nach Anspruch 1, **dadurch gekennzeichnet, daß**
- der externe Bus (7, 8, 9) mindestens eine Steuerleitung (7) umfaßt,
- die Bussteuereinheit (3) ein Adressensteuersignal erzeugt, das einer der externen Bussteuerleitungen (7) zugeführt wird,
- wobei das Adressensteuersignal anzeigt, ob der gemultiplexte Bus gültige Adressensignale führt, und
- die Dauer des Adressensteuersignals erweiterbar ist.

3. Mikroprozessor nach Anspruch 2, **dadurch gekennzeichnet, daß** nach dem Wechsel von dem nichtgemultiplexten Busmodus zu dem gemultiplexten Busmodus die Dauer des Adressensteuersignals während des nächsten folgenden gemultiplexten Buszugriffes vergrößert ist.

4. Mikroprozessor nach einem der Ansprüche 1 bis 3, **dadurch gekennzeichnet, daß**
- mindestens ein Steuerregister (SYSCON, BUSCON, ADDRESS) vorgesehen ist,
- wobei das Steuerregister (SYSCON, BUSCON, ADDRESS) Daten speichert,
- wobei die Daten einen Adressenbereich anzeigen,
- wobei die Daten die Breite des externen Datenbusses (8, 9) für den gültigen Adressenbereich anzeigen,
- und wobei die Daten anzeigen, ob sich der externe Bus (7, 8, 9) für den Adressenbereich in dem gemultiplexten Modus oder in dem nichtgemultiplexten Modus befinden.

5. Mikroprozessor nach Anspruch 4, **dadurch gekennzeichnet, daß** die Daten des Steuerregisters (SYSCON, BUSCON, ADDRESS) anzeigen, ob ein "chip-select"-Signal erzeugt wird.

6. Mikroprozessor nach Anspruch 4 oder 5, **dadurch gekennzeichnet, daß** das Steuerregister Daten speichert, die anzeigen, ob und wieviele "wait-states" während eines externen Peripheriezugriffs erzeugt werden.

7. Mikroprozessor nach Anspruch 6, **dadurch gekennzeichnet, daß** die Daten mindestens anzeigen, ob eine der externen Bussteuerleitungen (7) ein "Ready"-Eingangssignal führt, das anzeigt, ob ein Zugriff auf das externe Peripheriegerät (10) abgeschlossen ist, sodaß Daten auf den externen Datenbusleitungen (8, 9) verfügbar sind.

8. Mikroprozessor nach Anspruch 7, **dadurch gekennzeichnet, daß** das "Ready"-Eingangssignal erst dann geprüft wird, nachdem die programmierte Anzahl von "wait-states" erreicht worden ist.

9. Mikroprozessor nach Anspruch 8, **dadurch gekennzeichnet, daß** die Daten mindestens bestimmen, ob das "Ready"-Eingangssignal im asynchronen oder synchronen Modus verwendet werden soll.

10. Mikroprozessor nach einem der Ansprüche 4 bis 9, **dadurch gekennzeichnet, daß**
- eine der externen Bussteuerleitungen (7) ein "Read/Write"-Signal führt,
- das Steuerregister (SYSCON, BUSCON, ADDRESS) Daten speichert, die im gemultiplexten Busmodus bestimmen, ob das "Read/Write"-Signal verzögert wird.

11. Mikroprozessor nach einem der Ansprüche 4 bis 10, **dadurch gekennzeichnet, daß** das Steuerregister (SYSCON, BUSCON, ADDRESS) Daten speichert, die im gemultiplexten Busmodus bestimmen, ob die "tristate"-Zeit der externen Leitungen (7, 8, 9), die die Adressensignale führen, erhöht wird.

## Revendications

1. Microprocesseur (1) comprenant
- des lignes de données (5), des lignes d'adresses (4), et des lignes de commande (6) formant un bus interne (4, 5, 6),
- une pluralité de lignes externes (7, 8, 9) formant un bus externe (7, 8, 9), ledit bus externe (7, 8, 9) étant capable de connecter n'importe quel dispositif périphérique (10) audit microprocesseur (1),
- un moyen de connexion pour connecter le bus externe (7, 8, 9) audit microprocesseur (1),
- une unité de commande de bus unique (3) pour connecter ledit bus interne (4, 5, 6) audit bus externe (7, 8, 9), le bus interne (4, 5, 6) et le bus externe (7, 8, 9) ayant différentes structures de leurs signaux de commande,
- l'unité de commande de bus (3) ayant un moyen d'accéder au bus externe (7, 8, 9) avec des signaux de données et des signaux d'adresses,
- l'unité de commande de bus (3) ayant une première configuration où les signaux de données et les signaux d'adresses sont multiplexés chacun sur au moins un même ensemble de lignes externes (7, 8, 9),
- l'unité de commande de bus (3) ayant une deuxième configuration où les signaux de données et les signaux d'adresses sont fournis sur différents ensembles de lignes sur le bus externe (7, 8, 9),
- l'unité de commande de bus (3) étant programmable et les première et deuxième configurations dépendant de la programmation de l'unité de commande de bus (3) et
- différentes gammes d'adresses étant programmables et les différentes gammes d'adresses définissant l'accès différent du bus externe (7, 8, 9).
- comprenant aussi un moyen (11) pour verrouiller des signaux du bus interne (4, 5, 6) et/ou du bus externe (7, 8, 9),
- les lignes de commande (7) conservent leur fonction spécifique indépendamment de la largeur de bus de lignes de données/d'adresses sélectionnée.

2. Microprocesseur selon la revendication 1, **caractérisé en ce que** :
- ledit bus externe (7, 8, 9) comprend au moins une ligne de commande (7),
- ladite unité de commande de bus (3) génère un signal de commande d'adresses fourni à l'une des lignes de commande de bus externe (7),
- ledit signal de commande d'adresses indique si le bus multiplexé achemine des signaux d'adresses valables et
- la durée dudit signal de commande d'adresses est extensible.

3. Microprocesseur selon la revendication 2, **caractérisé en ce qu'**après la commutation d'un mode de bus non multiplexé à un mode de bus multiplexé, la durée du signal de commande d'adresses durant l'accès de bus multiplexé suivant est augmentée.

4. Microprocesseur selon l'une des revendications 1 à 3, **caractérisé en ce que**
- au moins un registre de commande (SYSCON, BUSCON, ADRESSES) est fourni,
- ledit registre de commande (SYSCON, BUSCON, ADRESSES) mémorise des données,
- lesdites données indiquent une gamme d'adresses,
- lesdites données indiquent la largeur du bus de données externe (8, 9) pour ladite gamme d'adresses valable,
- et lesdites données indiquent si le bus externe (7, 8, 9) se trouve dans le mode multiplexé ou le mode non multiplexé pour ladite gamme d'adresses.

5. Microprocesseur selon la revendication 4, **caractérisé en ce que** les données dudit registre de commande (SYSCON, BUSCON, ADRESSES) indiquent si un signal de "sélection de puce" sera généré.

6. Microprocesseur selon la revendication 4 ou 5, **caractérisé en ce que** ledit registre de commande stocke des données qui indiquent si, et combien, des "états d'attente" seront générés durant un accès de périphérique externe.

7. Microprocesseur selon la revendication 6, **caractérisé en ce que** lesdites données indiquent au moins si l'une des lignes de commande de bus externe (7) achemine un signal d'entrée "Ready" qui indique si un accès à un dispositif périphérique externe (10) a été réalisé, si bien que des données sur les lignes de bus de données externes (8, 9) sont disponibles.

8. Microprocesseur selon la revendication 7, **caractérisé en ce que** le signal d'entrée "Ready" est vérifié uniquement après que le nombre programmé "d'états d'attente" a été atteint.

9. Microprocesseur selon la revendication 8, **caractérisé en ce que** lesdites données déterminent au moins si ledit signal d'entrée "Ready" doit être utilisé en mode asynchrone ou synchrone.

10. Microprocesseur selon l'une des revendications 4 à 9, **caractérisé en ce que**,
- l'une des lignes de commande de bus externe (7) achemine un signal de "Lecture/Ecriture",
- ledit registre de commande (SYSCON, BUSCON, ADRESSES) stocke des données qui détermine dans le mode de bus multiplexé, si le signal de "Lecture/Ecriture" sera retardé.

11. Microprocesseur selon l'une des revendications 4 à 10, **caractérisé en ce que** ledit registre de commande (SYSCON, BUSCON, ADRESSES) stocke des données qui déterminent dans le mode de bus multiplexé si le temps de "Trois Etats" des lignes externes (7, 8, 9) acheminant les signaux d'adresses sera augmenté.
